Europäisches Patentamt

(19) European Patent Office

Office européen des brevets

(11) Numéro de publication : **0 192 856**
**B1**

(12) **FASCICULE DE BREVET EUROPÉEN**

(45) Date de publication du fascicule du brevet :
**30.08.89**

(51) Int. Cl.⁴ : **G 21 F   5/00**, F 16 F   7/12

(21) Numéro de dépôt : **85200259.1**

(22) Date de dépôt : **26.02.85**

(54) **Amortisseur pour panier d'assemblages nucléaires.**

(43) Date de publication de la demande :
**03.09.86 Bulletin 86/36**

(45) Mention de la délivrance du brevet :
**30.08.89 Bulletin 89/35**

(84) Etats contractants désignés :
**AT BE CH DE FR GB IT LI LU NL SE**

(56) Documents cités :
**EP-A- 0 049 437**
**US-A- 2 578 903**

(73) Titulaire : **ACEC, Société Anonyme**
**Avenue Lloyd George 7**
**B-1050 Bruxelles (BE)**

(72) Inventeur : **Fabris, Mirko**
**5, Rue de l'Argayon**
**B-1400 Nivelles (BE)**

(74) Mandataire : **Bosch, Henry et al**
**Office VAN MALDEREN Boulevard de la Sauvenière, 85/042**
**B-4000 Liège (BE)**

## Description

L'invention concerne un amortisseur pour les paniers servant au transport et au stockage des assemblages nucléaires. Cet amortisseur métallique réduit les effets des chocs violents par la déformation d'une tôle calibrée, déformable dans le sens de la longueur, disposée en cavalier sur un profil en forme de rail et accrochée par ses extrémités à l'élément à protéger, la semelle du rail faisant alors office de butoir. Dans les installations de retraitement du combustible nucléaire, les assemblages constitués d'un faisceau de crayons renfermant la matière fissile, sont véhiculés et entreposés dans des paniers formés de plusieurs cellules contenant chacune un assemblage. La plupart du temps ces paniers sont immergés dans des piscines profondes et sont soumis, tout au long du processus de retraitement à de nombreuses manipulations. Il peut arriver qu'une erreur de manipulation fasse basculer le panier ou encore le laisser choir brutalement sur le fond de la piscine, risquant ainsi d'abîmer les éléments combustibles et de contaminer la piscine.

Pour réduire les effets de ces chocs violents, on connait des structures dites en nid d'abeilles, formées généralement de cellules hexagonales jointives, que l'on dispose sur les parois du panier pour servir d'amortisseurs par déformation de la structure. Cette déformation correspond à un écrasement des cellules par un choc donné suivant une direction sensiblement parallèle à l'axe de symétrie des cellules hexagonales.

Ces structures en nid d'abeilles peuvent être en matière plastique ou en métal selon les applications envisagées. Leurs caractéristiques d'amortissement varient selon la matière utilisée, son épaisseur et le nombre de cellules par unité de surface.

Pour les applications nucléaires, les structures en nid d'abeilles doivent être réalisées en acier inoxydable. La complexité de leur fabrication, la difficulté de mise en œuvre et le coût des matériaux conduisent à des prix très élevés qui en limitent fortement l'application. La présente invention a pour but de réaliser un amortisseur métallique, de faible encombrement latéral et d'une grande simplicité de réalisation. Cet amortisseur est bien adapté aux conditions rencontrées dans les domaines d'exploitation de l'énergie nucléaire et peut servir selon des critères d'amortissement déterminés suivant les caractéristiques dimensionnelles de ses composants.

L'invention telle qu'elle est caractérisée dans les revendications résout le problème de réduire la violence des chocs en utilisant un amortisseur métallique constitué d'une tôle rectangulaire calibrée, déformable dans le sens de la longueur, prenant appui à mi-longueur sur la partie arrondie d'un profil en forme de rail pour s'y disposer en cavalier, et portant à ses deux extrémités libres des épaulements s'accrochant au panier à protéger.

Les avantages obtenus grâce à cette invention consistent essentiellement en ce que cet amortisseur métallique est de grande simplicité et de faible coût de réalisation.

Son faible encombrement latéral permet de l'insérer dans des échancrures prévues à cet effet. Ses performances peuvent être déterminées par les facteurs géométriques et structurels de ses composants.

L'invention est exposée ci-après plus en détail à l'aide des figures suivantes :

La figure 1 représente en perspective un amortisseur réalisé conformément à la présente invention.

La figure 2 est une vue en coupe d'un détail de l'amortisseur.

La figure 3 représente un exemple d'application pour la protection d'un flanc de panier.

La figure 4 représente un autre exemple d'application pour la protection d'un fond de panier.

La figure 5 montre schématiquement la disposition des paniers lors du stockage.

La figure 6 donne une variante de construction de l'amortisseur.

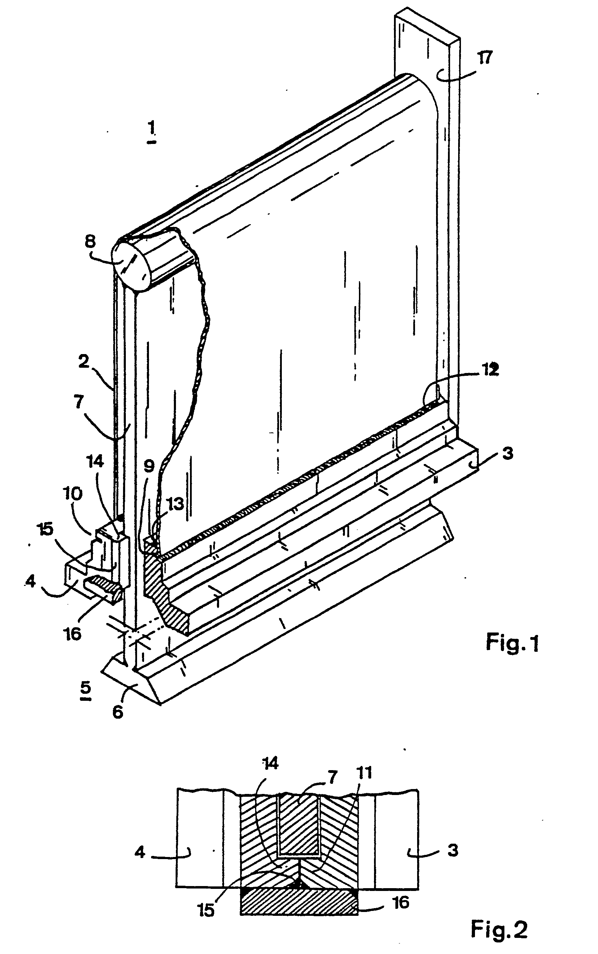

La figure 1 montre un exemple de réalisation d'un amortisseur métallique 1 selon l'invention.

Cet amortisseur est constitué d'une tôle calibrée 2, munie à ses extrémités de deux épaulements 3 et 4, et disposée en cavalier sur un profil 5 en forme de rail. Ce profil 5 comporte une semelle 6 sur laquelle prend appui une âme 7 surmontée d'un barreau 8 sur lequel vient se cambrer la tôle calibrée 2. Les extrémités de la tôle calibrée 2 sont insérées respectivement dans une fente 9 de l'épaulement 3 et dans une fente 10 de l'épaulement 4 et sont solidarisées à ces épaulements par deux cordons de soudure situés de part et d'autre de chaque extrémité de la tôle calibrée 2. Par exemple pour l'épaulement 3 une extrémité de la tôle calibrée est fixée par un cordon de soudure extérieur 12 et un cordon de soudure intérieur 13. Les épaulements portent à chaque extrémité un rebord s'étendant jusqu'à la mi-épaisseur de l'âme 7. Par exemple, l'extrémité visible de l'épaulement 4, située à l'avant de la figure 1 porte un rebord 14 qui associé avec le rebord, repéré en 11 sur la figure 2, de l'épaulement 3 forment une coulisse servant au centrage de la tôle calibrée 2 par rapport au profil 5 en forme de rail. Pour mieux percevoir la disposition de ces éléments nous nous reporterons à la figure 2 qui montre, en coupe, l'association des épaulements 3 et 4 et de leurs rebords respectifs 11 et 14 pour former une coulisse le long de l'âme 7.

Les rebords des épaulements 3 et 4 sont solidarisés entre eux par des cordons de soudure étalés dans les chanfreins faits à l'extrémité de chaque rebord tel qu'un chanfrein 15 sur le rebord 14 de l'épaulement 4. Les flancs des épaulements 3 et 4 servent d'assise à deux plats 16 et 17 qui protègent latéralement l'amortisseur métallique 1.

Lorsque la semelle 6 de l'amortisseur 1 montré à la figure 1 heurte un obstacle, l'absorption de l'énergie cinétique déforme la tôle calibrée 2 qui a préalablement été déterminée pour éviter la rupture même à fond de course c'est-à-dire lorsque la semelle 6 vient s'emboîter dans le creux formé à la partie extérieure de la coulisse constituée par les deux épaulements 3 et 4.

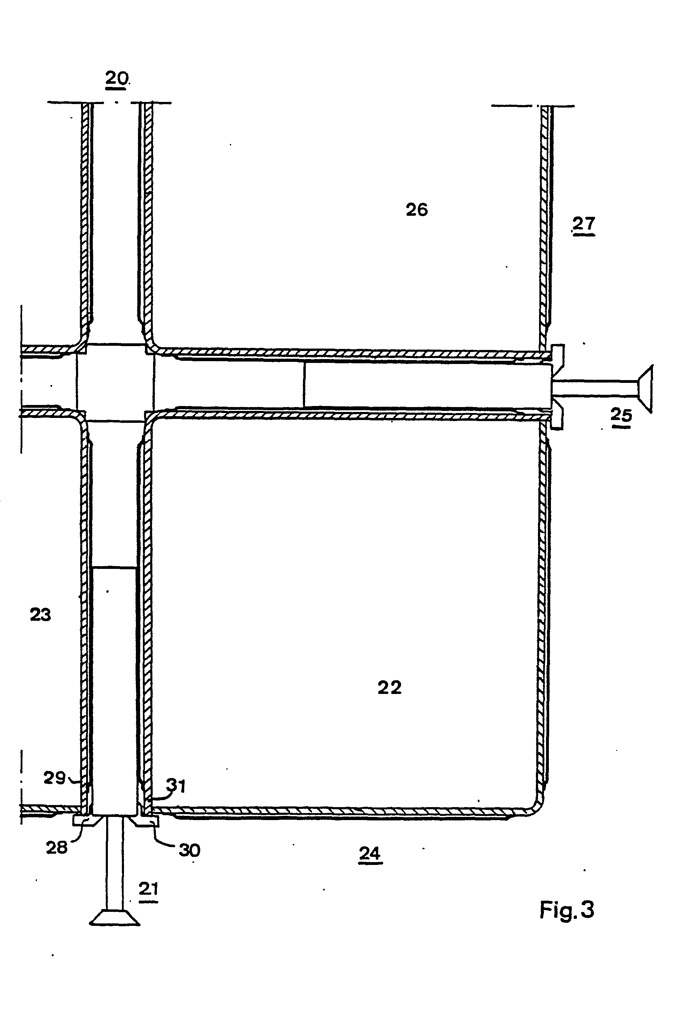

La figure 3 montre une première application des amortisseurs réalisés selon l'invention pour assurer la protection des flancs d'un panier 20. Un premier amortisseur 21 est inséré entre une cellule 22 formant un coin du panier 20 et une autre cellule 23 appartenant à un premier flanc 24 du panier 20. Un second amortisseur 25 est inséré entre la cellule de coin 22 et une autre cellule voisine 26 appartenant à un autre flanc 27 du panier 20.

La protection de chaque flanc du panier 20 est assurée par l'insertion d'amortisseurs, tels que les amortisseurs 21 et 25, dans les échancrures du panier 20.

Chaque flanc présente au moins deux échancrures équipées d'amortisseurs sur les deux tiers supérieurs de la hauteur du panier. Tous ces amortisseurs sont maintenus à leur place par des points de soudure qui solidarisent les épaulements aux tôles constitutives des enveloppes de chaque cellule. Par exemple l'amortisseur 21 est maintenu en position par des points de soudure solidarisant d'une part un épaulement 28 à une tôle 29 formant l'enveloppe de la cellule 23 et d'autre part un épaulement 30 à une tôle 31 formant l'enveloppe de la cellule 22. Lorsqu'à la suite d'une fausse manœuvre, le panier bascule dans la piscine, sa chute est d'abord ralentie par la résistance de l'eau puis amortie, en fin de course par des amortisseurs métalliques disposés sur le flanc percutant le fond de la piscine. Chaque amortisseur comme représenté à la figure 1, heurte l'obstacle par la semelle 6 du profil 5 de sorte que l'énergie cinétique du panier soit progressivement absorbée par la déformation de la tôle calibrée 2 étirée entre le barreau 8 et les épaulements 3 et 4.

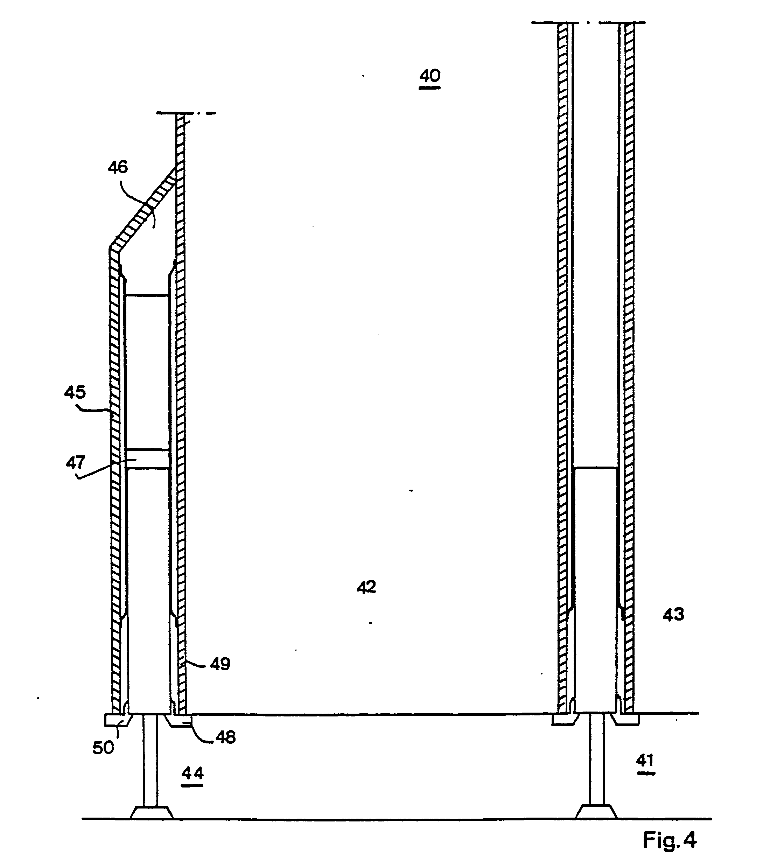

La figure 4 représente une autre application des amortisseurs réalisés selon l'invention pour assurer la protection du fond du panier 40. Un premier amortisseur 41 est inséré entre une cellule 42 d'un alignement de cellules disposé à gauche du panier 40 et une cellule voisine 43 située sur la même rangée que la cellule 42 mais appartenant à l'alignement contigu au premier cité.

Un second amortisseur est inséré entre la cellule 42 et une patte 45 rapportée à un flanc du panier 40 et raidie par des entretoises 46 et 47.

La protection du fond du panier 40 est assurée par l'insertion d'amortisseurs, tel que l'amortisseur 41 inséré dans les échancrures du panier 40, et tel que l'amortisseur 44, inséré entre les flancs du panier et les pattes rapportées telles que la patte 45.

Tous ces amortisseurs sont maintenus en place par des points de soudure qui solidarisent les épaulements aux tôles constitutives des enveloppes de chaque cellule ou aux pattes rapportées à chaque flanc du panier.

Par exemple l'amortisseur 44 est maintenu en position par des points de soudure solidarisant d'une part un épaulement 48 à une tôle 49 formant l'enveloppe de la cellule 42 et d'autre part un épaulement 50 à la patte rapportée 45.

Le nombre des amortisseurs et leurs caractéristiques, déterminées par les paramètres dimensionnels de la tôle calibrée 2 montrée en figure 1, sont calculés pour qu'à charge complète du panier 40, les tensions de traction dans les tôles calibrées ne dépassent pas la limite élastique de l'acier inoxydable choisi. Par contre si le panier percute le fond violemment suite à une manœuvre accidentelle les amortisseurs réduiront la violence du choc par déformation des tôles calibrées. Une troisième application des amortisseurs réalisés selon l'invention consiste à protéger les paniers entreposés dans la piscine contre les effets de secousses séismiques.

De manière à éviter les dommages occasionnés par des débattements latéraux trop importants, les flancs des paniers sont équipés d'amortisseurs dont la semelle de forme dissymétrique permet une meilleure insertion des paniers les uns à côté des autres.

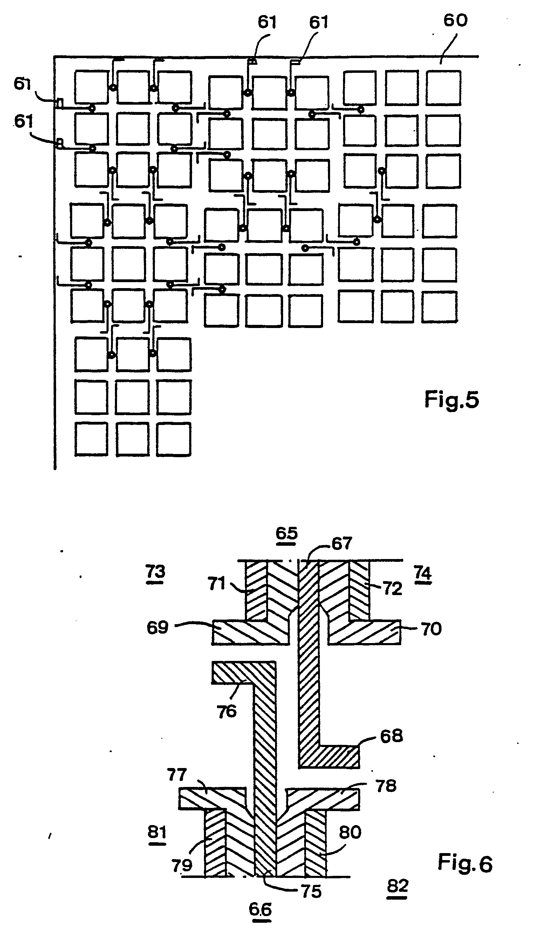

La figure 5 montre la disposition des paniers lors du stockage dans une piscine 60. Dans cette figure chaque amortisseur réalisé selon l'invention est schématisé par son profil présenté à la figure 1 sous le repère 5. On pourra remarquer que la semelle, repérée en 6 sur la figure 1, a pour cette application une forme dissymétrique qui sera détaillée ultérieurement. Dans la piscine 60, chaque panier a ses flancs protégés par des amortisseurs, disposés comme indiqué préalablement en figure 3, pour limiter les dégâts occasionnés, en cas de secousses séismiques par des chocs latéraux violents avec les bords de la piscine et/ou avec les paniers voisins. De manière à réduire l'encombrement des amortisseurs, chaque rangée, représentant un alignement dans le sens de la largeur sur la figure 5, et chaque colonne, représentant un alignement dans le sens de la hauteur sur la figure 5, est constituée de paniers décalés les uns par rapport aux autres pour permettre aux amortisseurs des paniers voisins de se disposer côte à côte à égale distance.

Dans cette disposition, les paniers, situés près des bords de la piscine 60 avec un retrait plus grand que leurs voisins, ont des semelles nanties d'une surépaisseur 61 reprenant la valeur de ce retrait de manière à ne pas donner à l'ensemble des paniers des oscillations d'amplitudes différentes génératrices de dégâts supplémentaires. La figure 6 montre le détail en coupe de la disposition respective de deux amortisseurs 65 et 66 appartenant à des paniers différents. Pour l'amortisseur 65, est représentée une partie d'une âme 67 terminée par une semelle dissymétrique 68. De part et d'autre de l'âme 67, deux épaulements 69 et 70 sont adossés respectivement à une tôle 71 formant l'enveloppe d'une cellule 73 et à une tôle 72 formant l'enveloppe d'une cellule voisine 74.

La même disposition se retrouve sur l'amortisseur 66 dont une âme 75 porte une semelle dissymétrique 76 orientée à l'inverse de la semelle 68 de l'amortisseur 65. De part et d'autre de l'âme 75 deux épaulements 77 et 78 sont adossés respectivement à une tôle 79 formant l'enveloppe d'une cellule 81 et à une tôle 80 formant l'enveloppe d'une cellule voisine 82.

De manière à disposer d'une surface de pose adéquate, les épaulements d'un panier offrent une surface plate suffisamment large pour que le pied de l'amortisseur du panier voisin prenne appui sur une surface raide et non pas sur une enveloppe du panier. Par exemple la semelle 76 de l'amortisseur 66 prend appui sur l'épaulement 69 de l'amortisseur 65. Une autre manière de prémunir les assemblages contre les effets des secousses séismiques est d'insérer des amortisseurs dans les flancs des rateliers disposés en périphérie de manière à réduire la violence des chocs de ces rateliers sur les bords de la piscine.

## Revendications

1. Amortisseur pour panier d'assemblages nucléaires caractérisé en ce qu'il comporte une tôle calibrée (2), déformable dans le sens de la longueur, prenant appui à mi-longueur sur une partie arrondie (8) d'un élément central (5) pour s'y adosser en cavalier, et portant à ses deux extrémités libres des épaulements (3 et 4) s'accrochant au panier à protéger et s'appuyant sur l'élément central (5) dont l'autre extrémité fait office de butoir.

2. Amortisseur selon la revendication 1 caractérisé en ce que les épaulements (3 et 4) sont solidarisés entre eux de manière à constituer une coulisse servant de guide le long de l'élément central (5) lorsque la tôle calibrée (2) s'allonge pour absorber l'énergie cinétique.

3. Amortisseur selon la revendication 2 caractérisé en ce que l'assemblage des épaulements (3 et 4) est renforcé latéralement par deux plats (16 et 17) pour protéger les tranches de la tôle calibrée (2).

4. Amortisseur selon la revendication 1 caractérisé en ce que la tôle calibrée (2) reste en régime de déformation plastique à fond de course de l'amortisseur.

5. Amortisseur selon la revendication 1 caractérisé en ce que l'extrémité de l'élément central (5) faisant office de butoir est garnie d'une semelle (6).

6. Amortisseur selon la revendication 5 caractérisé en ce que la semelle (6) est dissymétrique par rapport à l'extrémité de l'élément central (5).

7. Amortisseur selon une des revendications précédentes caractérisé en ce que chaque extrémité de la tôle calibrée (2) est insérée dans une fente (9) d'un épaulement (3) et solidarisée à celui-ci par un cordon de soudure masquant la fente, appelé cordon de soudure extérieur (12) et un second cordon de soudure fait sur l'autre face de la tôle calibrée (2) et appelé cordon de soudure intérieur (13).

## Claims

1. Damper for a container of nuclear assemblies, characterized in that it comprises a calibrated sheet (2) which may be deformed in the longitudinal direction, bearing halfway along on a rounded part (8) of a central element (5) in order to straddle it, and bearing at its two free ends shoulders (3 and 4) attaching to the container to be protected and bearing on the central element (5) whose other end acts as a stop.

2. Damper according to Claim 1, characterized in that the shoulders (3 and 4) are integral with one another so as to constitute a slide acting as a guide along the central element (5) when the calibrated sheet (2) is extended in order to absorb kinetic energy.

3. Damper according to Claim 2, characterized in that the assembly of the shoulders (3 and 4) is reinforced laterally by two flats (16 and 17) in order to protect the edges of the calibrated sheet (2).

4. Damper according to Claim 1, characterized in that the calibrated sheet (2) remains plastically deformed at the end of travel of the damper.

5. Damper according to Claim 1, characterized in that the end of the central element (5) acting as a stop is fitted with a sole plate (6).

6. Damper according to Claim 5, characterized in that the sole plate (6) is asymmetrical with respect to the end of the central element (5).

7. Damper according to one of the preceding claims, characterized in that each end of the calibrated sheet (2) is inserted in a slot (9) of a shoulder (3) and secured to the latter by means of a weld bead masking the slot, referred to as the outer weld bead (12), and a second weld bead made on the other face of the calibrated sheet (2) and referred to as the inner weld bead (13).

## Patentansprüche

1. Stoßdämpfer eines Kernbrennelement-Behälters, dadurch gekennzeichnet, daß er ein in Längsrichtung verformbares, kalibriertes Blech (2) aufweist, das auf halber Länge auf einem verrundeten Teil (8) eines zentralen Elements (5) aufliegt und darum herumgeführt ist, und das an seinen zwei freien Enden Schultern (3 und 4) aufweist, die sich an dem zu schützenden Behälter festhaken, und die sich auf das zentrale Element (5) stützen, dessen anderes Ende als Anschlag dient.

2. Stoßdämpfer gemäß Anspruch 1, dadurch gekennzeichnet, daß die Schultern (3 und 4) so miteinander fest verbunden sind, daß eine Gleitführung gebildet wird, die zur Führung längs des zentralen Elements (5) dient, wenn das kalibrierte Blech (2) sich dehnt, um die kinetische Energie zu absorbieren.

3. Stoßdämpfer gemäß Anspruch 2, dadurch gekennzeichnet, daß die Verbindung der Schultern (3 und 4) seitlich durch zwei Platten (16 und 17) verstärkt ist, um die Ränder des kalibrierten Blechs (2) zu schützen.

4. Stoßdämpfer gemäß Anspruch 1, dadurch gekennzeichnet, daß das kalibrierte Blech (2) bei vollem Hub des Stoßdämpfers im Bereich der plastischen Verformung bleibt.

5. Stoßdämpfer gemäß Anspruch 1, dadurch gekennzeichnet, daß das als Anschlag dienende Ende des zentralen Elements (5) mit einer Bodenplatte (6) versehen ist.

6. Stoßdämpfer gemäß Anspruch 5, dadurch gekennzeichnet, daß die Bodenplatte (6) bezüglich des Endes des zentralen Elements (5) unsymmetrisch ist.

7. Stoßdämpfer gemäß einem der vorhergehenden Ansprüche, dadurch gekennzeichnet, daß jedes Ende des kalibrierten Blechs (2) in einen Spalt (9) einer Schulter (3) eingeschoben ist, und mit dieser Schulter (3) einerseits durch eine den Spalt verdeckende, äußere Schweißnaht (12), und andererseits durch eine auf der anderen Seite des kalibrierten Blechs (2) ausgeführte, innere Schweißnaht (13) fest verbunden ist.

Fig.1

Fig.2

Fig.3

40

46

45

47

42

43

49

50

48

44

41

Fig. 4

Fig.5

Fig.6